# EUROPEAN PATENT APPLICATION

(11) **EP 4 624 227 A1**
(43) Date of publication of application: **01.10.2025**
(21) Application number: 25163324.4
(22) Date of filing: 12.03.2025
(51) Int. Cl.: B60L 50/10, B60K 6/20, B60K 6/22, B60K 6/42

(54) **CONTROL SYSTEM FOR A TRAIN**

(30) Priority: 25.03.2024 GB 202404213
(71) Applicant: Hitachi Rail Limited, London EC4M 7AW (GB); Hitachi, Ltd., Tokyo 100-8280 (JP)
(72) Inventor: DAUTEL, Christopher, London EC4M 7AW (GB); OURA, Yuta, Tokyo 100-8280 (JP); NISHIMURA, Yoshitaka, Tokyo 100-8280 (JP)
(74) Representative: Mewburn Ellis LLP

(57) **Abstract**

There is provided a method and a control system for operating a drive system of a train in a plurality of driving modes. The plurality of driving modes include: a generator mode in which power is drawn from an on-board generator, a hybrid mode in which power is drawn from the on-board generator assisted by one or more on-board electrical storage systems, and a battery-only mode where power is drawn only from the one or more on-board electrical storage systems. The control system is configured to: receive a detected state of charge, SoC, from the one or more on-board electrical storage systems, determine an availability of one or more of the driving modes based on the detected SoC, and allow the drive system to operate in one of the available driving modes.

## Description

### Field of the Invention

The present invention relates to methods and systems for operating a drive system of a train.

### Background

Conventional self-powered trains receive electrical power from on-board power sources. Generally, self-powered trains comprise on-board generator units (GUs), such as diesel engine-powered electricity generators, which generate the electrical power for the propulsion systems of the train.

Other trains have a hybrid self-powered drive system comprising GUs assisted by on-board energy storage systems (OBESSs), such as batteries. On conventional hybrid trains, GUs are used as the main source of motive power. The GUs are typically assisted by the OBESSs, in a hybrid drive mode, when the train is accelerating. The OBESSs contribute to overall improvements in energy consumption by enabling regenerative braking in which kinetic energy of the train is converted into regenerated electrical power for subsequent re-use. However, conventional hybrid trains require that the GUs remain active at all times to provide motive power for the train and to power auxiliary systems which results in greenhouse gas emissions and noise pollution.

More recently, hybrid trains have been adapted to operate in a third, battery-only drive mode wherein the electrical power is provided only by the OBESSs. Typically, the battery-only drive mode may be used in areas where it is desirous to decrease greenhouse gas emissions and noise pollution in around, for example, train stations, residential areas, and cities. Therefore, the driver of the train or an automatic operation system may request the drive mode of the train to switch between each of the available self-powered drive modes (i.e., generator mode, hybrid mode, and battery-only mode) depending on the location of the train on a railway route.

When the train is operated in the hybrid mode or the battery-only mode, a state of charge (SoC) of the OBESSs reduces as the stored energy within is consumed. The rate of SoC reduction may be dependent on the amount of time that the train is operated in the hybrid or the battery-only mode and also on external factors such as environmental temperature, gradient of the railway route, inefficiencies in the propulsion system, etc. However, if the SoC of the OBESSs is allowed to reduce too far, then the lifetime of the OBESSs may be shortened.

WO 2011/000259 A1 proposes a control method for a generator set of an electrical vehicle. A driving mode is selected according to a trip plan, and during travel a vehicle controller commands a generator to turn on and off depending on the state of charge of the battery and the vehicle speed. US 8,392,042 B2 proposes a method for driving a hybrid traction chain based on the battery charge state. EP 4 230 456 A1 proposes a hybrid electric vehicle where a control device of the same executes management of a remaining battery level of the battery for securing a specific remaining battery level as travel assistance. US 2007/145924 A1 proposes a control apparatus for a motor generator of a hybrid vehicle. The control apparatus shifts the operation of the motor generator between the generator and motor modes. GB 2616876 A proposes a system for managing the operation of trains in a network. A remote control centre transmits to each train data defining one or more regions in which a given power mode should be used.

The inventors have devised the present invention in light of these considerations.

### Summary of the Invention

In a general sense, the present invention provides a method of determining a list of available drive modes for a train depending on a state of charge (SoC) of the train's on-board storage systems (OBESSs). The train may then be operated in one of the available drive modes, irrespective of driver requests or a current location of the train, thereby ensuring that the SoC of the OBESSs is maintained at a suitable level. Additionally, the availability of the drive modes may be configured to favour use of the OBESSs over the GU when the SoC of the OBESS is high. This can help maximise a proportion of a journey time in which the train uses the OBESSs instead of the GU, thereby reducing overall emissions of the train.

The invention is set out in the appended set of claims.

In a first aspect, there is provided a control system for a train as set out in claim 1. The control system being configured to operate a drive system of the train in a plurality of driving modes including: a generator mode in which power for the drive system is drawn from an on-board generator, a hybrid mode in which power for the drive system is drawn from the on-board generator unit (GU) assisted by one or more on-board electrical storage systems (OBESSs), and a battery-only mode where power for the drive system is drawn only from the one or more on-board electrical storage systems. The control system is configured to: receive a detected state of charge, SoC, from the one or more on-board electrical storage systems, determine an availability of one or more of the driving modes based on the detected SoC, and allow the drive system to operate in one of the available driving modes.

In this way, the control system can adapt to external influences which may affect the SoC of the OBESSs and adapt the driving modes available to the drive system based on the actual SoC, irrespective of driver requested modes or automatic system requests (e.g., based on geographical location). Accordingly, by determining the availability of the driving modes based on the SoC it can be ensured that the SoC of the OBESSs is maintained at a minimum level which prevents long-term deterioration of the OBESSs. Additionally, the train may operate using power from the OBESSs for a larger percentage of a journey time, even if, for example, the train driver does not realise that this is possible.

The generator (which may be referred to as a generator unit, GU) may be a diesel powered generator which is configured to generate electrical power from diesel. The electrical power may be used to provide motive power for the train and/or provide power to the train's auxiliary systems.

The one or more OBESSs may comprise one or more batteries with an associated SoC. The SoC of the OBESSs may therefore be referred to as a detected, measured, or actual SoC of the battery/OBESSs.

The availability of each driving mode may be an associated status of each driving mode as being available or not available to the drive system. Accordingly, determining the availability of each driving mode may comprise determining a list of the driving modes which are available based on the detected SoC. The control system may be configured to allow the drive system to operate in one of the available driving modes and prohibit the drive system from operating in a driving mode which is not available. In particular, the control system may be configured to prohibit the use of the OBESSs by the drive system if the detected SoC is determined to be below a predetermined threshold. Similarly, the control system may be prohibited from using the GU if the detected SoC is above predetermined threshold (i.e., when the OBESSs have an excess of charge).

The control system may be further configured to operate the drive system in one of the available driving modes (i.e., based on the determined availabilities). Therefore, if a current driving mode of the drive system is not an available drive mode, the control system may be configured to change the current driving mode into one of the drive modes that was determined to be available. This change may be automatic (i.e. without driver input), and may include alerting the driver to the change in driving mode.

The control system may be configured to receive a requested driving mode and determine if the requested driving mode is an available driving mode. If the requested driving mode is an available driving mode, the control system may be configured to operate the drive system in the requested driving mode. That is, if the requested driving mode is included in the list of available driving modes, then the control system may be configured to operate the drive system in the requested driving mode. However, if the requested driving mode is not an available driving mode (for example, if it is included in a list of prohibited driving modes, or not included in the list of available driving modes) then the control system may be configured to reject the requested driving mode.

The requested driving mode (which may be referred to as a selected or desired driving mode), may be received from a control interface. The control interface may be an operator interface comprising a driver input module optionally located in a driver cabin of the train. The requested driving mode may be contained within a driver instruction input by the driver into the driver input module. In further examples, the control interface may be configured to receive commands from a remote operator of the train. The requested driving mode may be contained within a command transmitted from the remote operator to the control system.

In other examples, the requested driving mode may be received from an automatic drive system for the train which is configured to request predetermined driving modes of the train, for example, based on a travel route of the train. For example, the requested driving mode may be received from a driving mode selection module which is configured to request a driving mode depending on a geographical location of the train. In this example, the requested driving mode may be selected based on if the train is located in a low emissions zone such as in a station or in a city. Accordingly, if the detected SoC of the OBESSs is too low to support OBESS use in a low emissions zone, then the hybrid and battery-only modes may be determined to be not available.

If the requested driving mode is determined to be not available, the control system may be configured to override the requested driving mode. Therefore, in some instances, the SoC of the OBESSs may be preserved in favour of using a low emission driving mode to ensure that the train has adequate power and to prevent the SoC of the OBESSs from decreasing too far which could cause the OBESSs to deteriorate.

In further examples, the requested driving mode may therefore be a current driving mode that the train is operating in. Therefore, in this example the control system may be configured to determine if the availability of the current driving mode has changed (i.e., is the current driving mode still an available driving mode).

Accordingly, the control system may be configured to determine a current driving mode of the drive system. If the current driving mode is not an available driving mode, the control system may be configured to update the drive system to operate in a driving mode which was determined to be available.

The control system may be configured to repeatedly (e.g., periodically at regular intervals, or in response to receiving one or more signals) determine an updated availability of one or more of the driving modes.

The control system may then operate the drive system in an available driving mode based on the updated availability. In particular, the control system may be configured to periodically compare the current driving mode of the drive system to the driving mode availabilities to ensure that the current driving mode is still an allowed driving mode based on the detected SoC.

Operating the drive system in one of the available driving modes may comprise: determining if a requested driving mode has been received (i.e., is pending), and if a requested driving mode is received, and it is an available driving mode, operating the drive system in the requested driving mode. However, if no requested driving mode has been received, the control system may be configured to determine the current driving mode or the drive system and, if the current driving mode is an available driving mode, continue operating the drive system in the current driving mode. However, if the current driving mode is not an available driving mode, then the control system may be configured to operate the drive system in a default driving mode.

The default driving mode may preferably be the battery-only mode, followed by the hybrid mode, followed by the generator mode, depending on which of the driving modes are determined to be available. By choosing the default driving mode in this order of preference, the use of battery-only mode may be maximised, thereby reducing overall emissions of the train.

Determining the availability of the one or more of the driving modes may comprise: determining which of a plurality of predetermined SoC value ranges the detected SoC resides in. The SoC value ranges may also be referred to as regions, bands, levels, or SoC areas between the thresholds.

Next, a list of available driving modes associated with the determined SoC value range may be retrieved from a database. According, the availability of each driving mode may be determined depending on if it is in the list of available driving modes or not. Analogously, driving modes which are not included in the list of available driving modes may be considered a prohibited or disabled driving modes.

Each SoC value range may be defined by one or more SoC thresholds. Each of the SoC value ranges may be associated with a respective list of available driving modes. Accordingly, the driving modes may be compared to a plurality of SoC thresholds defining a plurality of SoC regio value ranges ns (each SoC value ranges being associated with a list of available driving modes).

The list of available driving modes may be different between adjacent SoC value ranges. Accordingly, the SoC thresholds may define an SoC boundary over which the availability of one or more of the driving modes changes. In particular, the SoC thresholds may include three thresholds defining four SoC value ranges, the availability of the driving modes varying between adjacent SoC value ranges. The present inventors have found that by dividing the SoC range of the OBESSs into four value ranges enables the availability of the driving modes (including generator, hybrid, and battery-only modes) to be configured in a way which maximises the use of the OBESSs, while preventing the SoC of the OBESSs from reducing too far.

One or more of the SoC thresholds may have an associated buffer zone. Each buffer zone may be defined by an SoC margin above and/or below the respective threshold. The associated buffer zone may form a section of each SoC value range in which the current driving mode may not be changed. In some examples, all of the SoC thresholds may have an associated buffer zone within which the current driving mode may not be changed.

Accordingly, the control system may be configured to change the availability of the one or more driving modes based on the detected SoC, only if the detected SoC is determined to be outside of the buffer zones associated with the one or more thresholds. Accordingly, the control system may be configured to maintain the current driving mode of the train if the detected SoC is close to (i.e., within the associated buffer zone of) one of the SoC thresholds. Therefore, if the detected SoC is determined to be in a first of the SoC value ranges and then the detected SoC is determined to be in a second (different one) of the SoC value ranges, the control system may not update the current driving mode of the drive system until the detected SoC is detected in the second of the SoC value ranges and outside of the associated buffer zone (i.e., beyond the SoC margin which is above/below the SoC threshold between the first and second value ranges).

In this way, the drive system is prevented from oscillating between different driving modes when the detected SoC is close to one of the SoC thresholds. Switching between driving modes can be inefficient and more energy consuming, particularly if the generator unit is being turned off and on again. Therefore, the provision of buffer zones between the SoC value ranges can improve the overall efficiency of the drive system.

Each associated buffer zone may be defined by an SoC margin between 0.5% to 5% (of a maximum SoC capacity of the OBESSs) above and/or below the respective SoC threshold. The SoC margin may be around, or may be, 1%. Advantageously, a buffer zone of this size has been found to provide an adequate amount of anti-oscillation effect while ensuring the drive system is suitably reactive to changing SoC levels.

Each of the buffer zones may be symmetrically or asymmetrically arranged around the respective SoC threshold. For example, an SoC threshold (e.g., bordering an SoC value range associated with the battery-only and/or the hybrid mode) may only have a buffer zone above the threshold. This may be useful in examples where the SoC increases in small increments owing to regenerative breaking which may cause the SoC to oscillate around an SoC threshold.

The following sections discuss examples of SoC thresholds, the SoC value ranges therebetween, and the available driving modes associated with each SoC value range. For example, the SoC thresholds may comprise any or all of: a low-charge threshold, a mid-charge threshold, and a high-charge threshold as discussed herein.

The one or more SoC thresholds may include a low-charge threshold (which may be referred to as a lower threshold, a first threshold, or a generator mode threshold). If the detected SoC is lower than the low charge threshold, the available driving modes may include (or consist of) the generator mode. Accordingly, if the detected SoC is lower than the low charge threshold, the control system may be configured to operate the drive system in (only) the generator mode. In other words, the list of available driving modes associated with the SoC value range(s) below the low-charge threshold may include only the generator mode.

In this way, the SoC of the OBESSs may be prevented from reducing too far (i.e., beyond the low-charge threshold, or beyond an error margin of the low-charge threshold) because the OBESSs are not needed to provide power to the train in this SoC value range. Rather, the generator unit may be used provide electrical power for the train in the SoC value ranges below the low-charge threshold.

If the detected SoC is determined to be higher than the low-charge threshold, the available driving modes may include the battery-only mode and/or the hybrid mode. Therefore, if the detected SoC is determined to be higher than the low-charge threshold, the control system may be configured to operate the drive system in the battery-only mode or the hybrid mode. Accordingly, the list of available driving modes associated with one or more of the SoC value ranges above the low charge threshold may include the battery-only mode or the hybrid mode.

In some examples, if the detected SoC is determined to be higher than the low-charge threshold, the control system may be configured to operate the drive system in any of the plurality of driving modes, including the generator mode. For example, as discussed below, an upper ("high-charge") threshold may be defined above which the associated available driving modes include only the generator mode whereas the driving modes associated with one or more SoC value ranges between the low-charge threshold and the high-charge threshold may include the battery-only and the hybrid modes.

The low-charge threshold may, for example, correspond to between 10% to 40%, more preferably 25% to 35%, more preferably 30% of a maximum charge capacity of the OBESSs.

The SoC thresholds may include a mid-charge threshold which may also be referred to as a mid-range threshold. The mid-charge threshold may correspond to a higher SoC than the low-charge threshold. If the detected SoC is lower than the mid-charge threshold, the control system may be configured to operate the drive system in the hybrid mode or the generator mode. Accordingly, the list(s) of available driving modes associated with one or more SoC value ranges below the mid-charge threshold may include the generator mode and/or the hybrid mode.

In particular, if the detected SoC is lower than the mid-charge threshold and higher than the low-charge threshold, the control system may be configured to operate the drive system in only the hybrid mode. That is, if the detected SoC is determined to be in an SoC value range between (i.e., defined by) the low-charge threshold and the mid-charge threshold, the available driving modes may include only the hybrid mode.

The mid-charge threshold may correspond to between 30% to 50%, more preferably 35% to 45%, more preferably 40% of a maximum charge capacity of the OBESSs.

If the detected SoC is higher than the mid-charge threshold, the available driving modes may include the battery-only mode and the hybrid mode. Therefore, if the detected SoC is higher than the mid-charge threshold, the control system may be configured to operate the drive system in the battery-only mode or the hybrid mode. In this way, if the OBESSs are in a higher state of charge, the train is preferably driven using only the OBESSs (or the OBESSs and the GU), thereby reducing overall emissions of the train during a journey.

As mentioned above, the SoC thresholds may include a high-charge threshold (which may also be referred to as an upper threshold, an overcharge threshold, a max charge limit, etc). The high charge threshold may correspond to a SoC which is higher than the low-charge and discharge thresholds. If the detected SoC is determined to be lower than the high-charge threshold, the available driving modes may include the hybrid mode and the battery-only mode. The driving mode may be selected from the available modes based on a driver request or system request (e.g., based on a current location of the train). If the detected SoC is lower than the high-charge threshold, the control system may be configured to operate the drive system in any driving mode (for example the generator mode may be available if the detected SoC is lower than the low-charge threshold, of the hybrid and battery-only modes may be available above the low-charge threshold).

If the detected SoC is determined to be within an SoC value range located between the high-charge threshold and the mid-charge threshold, the control system may be configured to operate the drive system in only the battery-only mode or the hybrid mode. In this way, if the OBESSs are in a higher state of charge, without being overcharged, the train is preferably driven using only the OBESSs (or the OBESSs and the GU), thereby reducing overall emissions of the train during a journey.

If the detected SoC is higher than the high-charge threshold, the available driving modes may include only the generator mode. Therefore, if the detected SoC is higher than the high-charge threshold (i.e., within an SoC value range located above the high-charge threshold) the control system may be configured to, optionally disconnect the OBESSs from the rest of the drive system and, operate the drive system in only the generator mode.

The high-charge threshold may be at least 70%, more preferably at least 80% of a maximum charge capacity of the OBESS. For example, the high-charge threshold may be between 70% to 100%, more preferably between 75% to 90%, between 75% to 85%, more preferably 80% of a maximum SoC of the OBESSs.

The high-charge threshold may correspond to a maximum SoC of the one or more OBESSs, such that a SoC value range above the high-charge threshold corresponds to an overcharge SoC value range of the one or more OBESSs. Accordingly, the high-charge threshold may represent a maximum SoC of the OBESSs beyond which the OBESSs are not intended to reach. If the detected SoC is determined to be higher than the high-charge threshold, the OBESSs may be considered to be in an over-charge state resulting from a system error or malfunction. By operating the train in the generator mode and disconnecting the OBESSs in this SoC value range, further malfunctions of the drive system may be avoided and the OBESSs may be prevented from overcharging and sustaining damage. In this way, the drive system may continue to operate, using the generator, until the drive system/OBESSs can be inspected and repaired.

The control system may be further configured to receive a status parameter of the one or more OBESSs wherein the availability of the one or more driving modes is based on the received status parameter. The received status parameter may be indicative of environmental and/or operating parameter of the OBESSs and/or the drive system.

For example, the control system may be configured to receive a status of the drive system and adjust the one or more SoC thresholds based on the status. Adjusting the one or more SoC thresholds may comprise increasing or decreasing one or more of the thresholds depending on the received status. Therefore, one or more of the SoC value ranges may be increased or decreased in size, or moved to a relatively higher or lower SoC range based on the received status. The adjustment of the SoC thresholds based on the received status may also be applied to the one or more recharge thresholds discussed below for enabling and disabling a recharge function of the drive system.

The status may include an operating temperature of the one or more on-board electrical storage systems. For example, the control system may be configured to increase the low-charge threshold and/or the mid-charge threshold in proportion to the operating temperature. Therefore, at higher temperatures, the drive system may only operate in battery-only mode and/or the hybrid mode at relatively higher SoCs than for lower temperatures. This can help avoid accelerated aging, by reducing the current flow or using the battery less.

In this example, the control system may be configured to increase one or more of the SoC thresholds if the operating temperature increases, and if the operating temperature decreases, decrease one or more of the SoC thresholds. The SoC thresholds may be increased or decreased proportionally to the operating temperature. Alternatively, the control system may be configured to determine if the operating temperature has exceeded a threshold temperature, and in response to determining that the operating temperature has exceeded the threshold temperature, increase one or more of the SoC thresholds by a predetermined amount.

Alternatively or additionally, the status parameter of the one or more OBESSs may include one or more of: humidity, detected failure modes e.g., of the drive system, operating statuses, etc. For example, if the drive system is determined to be cooling less efficiently than expected and triggers a failure mode, then the control system may be configured to adjust the SoC thresholds and/or disable one or more of the driving modes accordingly.

The control system may be further configured to enable or disable a recharge mode of the drive system based on the detected SoC. The recharge mode may be capability of the one or more OBESSs to re-charge during regenerative braking of the train to increase the SoC of the one or more OBESSs. Accordingly, the control system may be configured to enable recharging of the OBESSs at lower SoCs and disable recharging of the OBESSs at higher SoCs (to avoid overcharging of the OBESSs).

Enabling or disabling the recharge mode based on the detected SoC may comprise comparing the detected SoC to one or more recharge SoC thresholds.

For example, the one or more recharge thresholds may comprise an upper recharge threshold, wherein if the detected SoC is higher that the upper recharge threshold, the control system may be configured to disable the recharge mode. On the other hand, if the detected SoC is determined to be lower than the upper recharge threshold the control system may be configured to enable the recharge mode.

The upper recharge threshold may be the same as or lower than the high-charge SoC threshold above which the OBESS is may be disconnected from the rest of the drive system (as discussed above). For example, the upper recharge threshold may be located between 2% to 20%, more preferably 5% to 15%, more preferably 10% lower than the high-charge threshold, above which the OBESSs are disconnected.

Therefore, by disabling recharging at this point, at a lower SoC than the overcharge limit, the OBESS is less likely to exceed the overcharge limit defined by the high-charge threshold.

The upper recharge threshold may be at least 60%, more preferably at least 65%, more preferably at least 70% of a maximum SoC of the OBESSs. Therefore, when the OBESSs have capacity for more charge, the recharge mode may be enabled, thereby increasing the SoC and enabling the OBESSs to be used in the battery-only mode and the hybrid mode for a greater proportion of the journey time. The upper recharge threshold may be no more than 90%, more preferably no more than 80%, more preferably no more than 70% of a maximum SoC of the OBESS. By providing a recharge threshold which is lower than a maximum SoC of the OBESSs, the OBESSs are less likely to be overcharged during a journey thus increasing a life expectancy of the OBESSs. Accordingly, the upper recharge threshold may be between 60% to 90%, more preferably between 65% to 75%, more preferably 70% of the maximum SoC of the OBESSs.

The one or more recharge thresholds may comprise a lower recharge threshold, wherein if the detected SoC is determined to be lower than the lower recharge threshold, the control system may be configured to disable the recharge mode. On the other hand, if the detected SoC is determined to be higher than the lower recharge threshold, the control system may be configured to enable the recharge mode. The lower recharge threshold may correspond to a lower SoC than the upper recharge threshold. Accordingly, the lower and upper recharge thresholds may define a SoC value range therebetween in which recharging of the OBESSs is enabled.

The lower recharge threshold may be the same as or lower than the low-charge SoC threshold (discussed above), below which the available driving modes may include only the generator mode. For example, the lower recharge threshold may between 2% and 15%, more preferably between 8% and 12% lower than the low-charge SoC threshold discusses above. Therefore, when the drive system is operating in the generator mode, the recharge mode can be enabled to increase the SoC of the battery (i.e., in a SoC value range which is between the lower recharge threshold and the low-charge SoC threshold).

For example, the lower recharge threshold may be between 0% to 30% of a maximum SoC of the OBESS, more preferably between 15% to 25%, more preferably 20%.

The lower recharge threshold may correspond to a target minimum SoC of the OBESSs below which the OBESSs are not intended to reach. Therefore, if the detected SoC is determined to be lower than the lower recharge threshold this may be an indication of fault in the drive system, or the OBESSs. Accordingly, the OBESSs may usefully be disconnected, and recharging disabled, in this value range to avoid any damage to the OBESSs or drive system until the fault can be inspected and/or repaired.

One or more of the recharge thresholds may have associated buffer zones (as described above in relation to the driving mode SoC thresholds) within which the control system is configured to maintain a current status of the recharge mode availability. Therefore, if the detected SoC is determined to be close to (i.e., within a buffer zone of) a recharge threshold, the control system may be configured to maintain the current (enabled or disabled) status of the recharge mode until the detected SoC is determined to be outside of the buffer zone.

The train may be further configured to operate in an additional, externally powered drive mode wherein electrical power is provided by an external power supply infrastructure. Accordingly, the generator mode, hybrid mode, and the battery-only mode may be considered as self-powered drive modes. The control system may be configured to operate the drive system in the externally powered drive mode when the train is located on electrified railway lines which have an external power supply infrastructure. In the externally powered drive mode, the train may receive electrical power from the external power supply infrastructure via external current collectors for example pantographs which connect to overhead lines (OHL) or shoe gear which connect to live rails on the railway tracks. The drive system may be operated in one of the self-powered drive modes when the train is located on non-electrified railway lines.

The train may be configured to cross to and from electrified and non-electrified sections of the railway lines by changing between the self-powered and externally powered drive modes. If the externally powered drive mode is available, (i.e., if the train is located on an electrified railway line) the control system may be configured to operate the drive system in the externally powered drive mode as a default driving mode.

In a second aspect of the present invention, there is provided a train comprising a drive system configured to operate in a plurality of driving modes, and a control system configured to operate the drive system. The plurality of driving modes include: a generator mode in which power is drawn from an on-board generator of the train, a hybrid mode in which power is drawn from the on-board generator unit (GU) assisted by one or more on-board electrical storage systems (OBESSs) of the train, and a battery-only mode where power is drawn only from the one or more on-board electrical storage systems. The control system is configured to: receive a detected state of charge, SoC, from the one or more on-board electrical storage systems, determine an availability of one or more of the driving modes based on the detected SoC, and allow the drive system to operate in one of the available driving modes. The train may include a plurality of cars.

The control system may be configured to perform any of the optional features discussed above in relation to the control system of the first aspect.

In a third aspect of the present invention there is provided a computer-implemented method of operating a drive system of a train, the drive system being configured to operate in a plurality of driving modes including: a generator mode in which power is drawn from an on-board generator, a hybrid mode in which power is drawn from the on-board generator unit (GU) assisted by one or more on-board electrical storage systems (OBESSs), and a battery-only mode where power is drawn only from the one or more on-board electrical storage systems. The computer-implemented method comprises: receiving a detected state of charge, SoC, from the one or more on-board electrical storage systems, determining an availability of one or more of the driving modes based on the detected SoC, and allowing the drive system to operate in one of the available driving modes.

Computer-implemented method of the third aspect may further include any of the optional steps described above in relation to functions of the control system of the first aspect. Further, a control system may be provided which is configured to perform the computer-implemented method of the third aspect.

In a further aspect of the present invention, there is provided a computer program product comprising instructions which, when executed by a computer, cause the computer to perform the computer-implemented method of the third aspect.

In a further aspect, there is provided a computer-readable medium comprising instructions that, when executed by a computing apparatus, cause the computing apparatus to carry out the computer-implemented methods described herein.

The invention includes the combination of the aspects and preferred features described except where such a combination is clearly impermissible or expressly avoided.

### Summary of the Figures

Embodiments and experiments illustrating the principles of the invention will now be discussed with reference to the accompanying figures in which:
**Fig. 1** shows an example drive system of a hybrid train;
**Fig. 2** shows a train according to aspects of the present invention;
**Fig. 3** shows a control system for a train according to aspects of the present invention;
**Fig. 4** shows a plot of OBESS SoC during a train journey;
**Fig. 5** shows a table of driving mode availabilities for different SoC value ranges;
**Fig. 6** shows a flow diagram of a method for controlling a drive system of a train;
**Fig. 7** shows a flow diagram of another method for controlling a drive system of a train;
**Fig. 8** shows a flow diagram of another method for controlling a drive system of a train;
**Fig. 9** shows a flow diagram of another method for controlling the drive system of a train; and
**Fig. 10** shows a diagram of SoC threshold levels for different operating temperatures of the OBESSs.

### Detailed Description of the Invention

Aspects and embodiments of the present invention will now be discussed with reference to the accompanying figures. Further aspects and embodiments will be apparent to those skilled in the art. All documents mentioned in this text are incorporated herein by reference.

### Figure 1

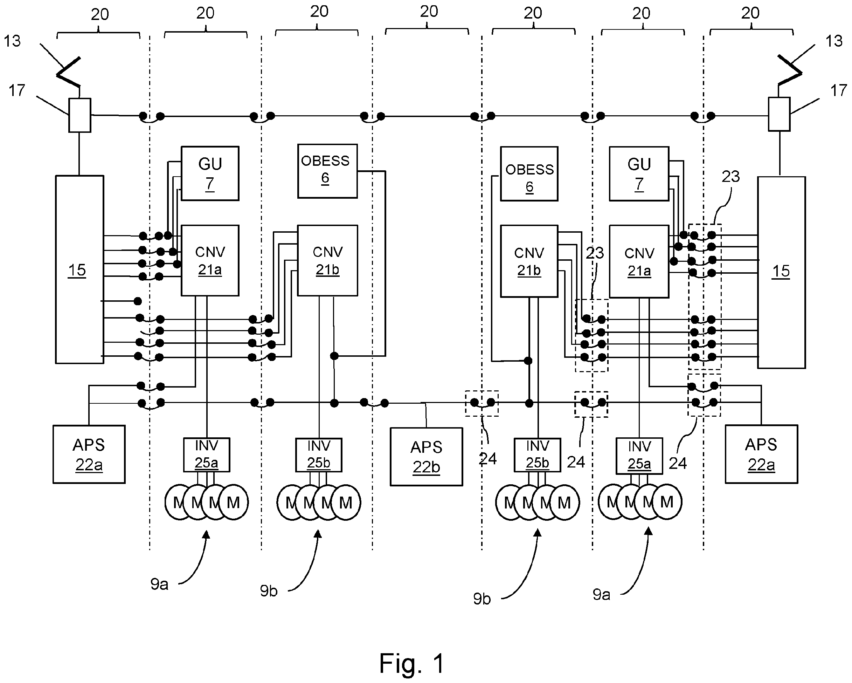

Figure 1 shows a schematic of an example drive system for a hybrid train. In this example, the train may be operated in: a battery-only mode, a hybrid-mode, a generator-only mode and an over-head mode. In other examples according to the present invention, the train may only be self-powered and so may not have an over-head mode.

The train is driven by traction motors 9a and 9b using electrical power provided by the external power supply infrastructure (over-head mode), or by generator units, Gus, 6 with optional support from the on-board energy storage systems (hybrid mode), OBESSs, 7, or by the OBESSs alone (battery-only mode) according to the drive mode being provided by the control system.

Optionally, external current collectors 13 are provided to connect to the external power supply infrastructure on electrified sections of the railway line. Typically, the external current collectors are roof-mounted pantographs, which are raised by the control system to connect to overhead lines (OHL) (not shown). However, they may be shoe gear provided beneath the train for connecting to live rails along the tracks. Main voltage transformers 15 are provided to adjust the voltage level between the external power supply infrastructure and the on-board systems. Vacuum circuit breakers (VCBs) 17, or similar, are provided to disconnect the pantographs from the main voltage transformers when they are not in use.

Typically, each GU 6 combines a diesel engine and an electricity generator powered by that engine to produce AC electrical power. However, other arrangements are possible. For example, the Gus could be fuel cells in which a fuel, such as hydrogen, is oxidised to generate DC electrical power. Each OBESS 7 is typically a battery system having an associated state of charge (SoC).

The train may comprise a series of coupled cars 20 in which, as shown in Figure 1, some cars contain respective Gus 11 and first traction motors 9a, and other cars contain respective OBESSs 7 and second traction motors 9b. Alternatively, the Gus and OBESSs may be housed in the same cars, along with their respective first and second traction motors.

Other cars are shown in Figure 1 which do not contain Gus or OBESSs, such as for example the lead and tail cars which typically carry the external current collectors 13 and house the main voltage transformers 15. Auxiliary power supply (APS) units 22a, 22b provided to power the train's auxiliary systems (i.e. power outlets, lights, doors, and air-conditioning systems etc.) may conveniently be located in cars without Gus and OBESSs.

First converter-inverter devices are provided on the cars with the Gus 6 and second converter-inverter devices are provided on the cars with the OBESSs 7. Each first converter-inverter device comprises a first converter circuit 21a and a first inverter circuit 25a joined to its converter circuit by a first DC link, the device providing three phase AC power from the first inverter circuit to drive respective first traction motors 9a. Similarly, each second converter-inverter device comprises a second converter circuit 21b and a second Inverter circuit 25b joined to its converter circuit by a second DC link, the device providing three phase AC power from the second inverter circuit to drive respective second traction motors 9b. The first and second converter circuits contain AC/DC converters to convert AC electrical power from the external current collectors 13 to DC electrical power. Moreover, in the case of the first converter circuits, these AC/DC converters can also convert AC electrical power from the GUs to DC electrical power. In the case of the second converter-inverter devices, the second DC-links can receive DC electrical power from the OBESSs.

Capacitors (not shown) help the first and second DC links to maintain constant DC voltages. When the DC links receive electrical power from the external current collectors 13 or the GUs 6 they are maintained at a first DC voltage and when DC links receive electrical power from the OBESSs 7 they are typically maintained at a second, different, DC voltage.

The control system manages the first 21a and second 21b converter circuits, and the first 9a and second 9b traction motors. Generally, the control system has a speed controller operable (e.g., by a driver) to select a target vehicle velocity which is converted into target torques for the traction motors. The control system adjusts the amount of electrical power supplied to the first and second traction motors to achieve the target vehicle velocity.

The APS units 22a, 22b receive DC electrical power from the first and second DC links, with the DC electrical power being conducted to neighbouring cars though inter-car DC electrical connectors 24. The control system can close such DC electrical connectors 24 along connecting lines joining APS units as needed to enable sharing of DC electrical power between selected APS units, as discussed in more detail below. However, the control system can also open the DC electrical connectors 24 to electrically isolate the APS units from each other.

In the over-head mode, high voltage, single phase AC electrical power is obtained from the OHLs through the pantographs 13 and applied, via the closed VCBs 17, to the main voltage transformers 15. The resulting reduced voltage AC electrical power is supplied to the first 21a and second 21b converter circuits. The AC electrical power is conducted to neighbouring cars though inter-car AC electrical connectors 23. The AC electrical power is converted to DC electrical power in the first 21a and second 21b converter circuits. The DC electrical power is then conducted by the first and second DC links to the first 25a and second 25b inverter circuits which provide the three phase AC power required by the first 9a and second 9b traction motors. In this way the first and second traction motors can provide torque contributions using electrical power from the external power supply infrastructure. During this operation, the first and second DC links are maintained at the first DC voltage.

The OBESSs 7 may be fitted with DC choppers to step down the first DC voltage in order to enable charging of the OBESSs using electrical power from the OHLs. In this way the OBESSs can increase their SoC on electrified sections of the railway line. The OBESS may also be connected directly to the DC link(s).

Furthermore, when the train is actively braking, the control system may operate the first 9a and second 9b traction motors as generators to produce a negative torque contribution. The traction motors thus act as generators to convert kinetic energy of the train into regenerated electrical power. The regenerated electrical power can be fed back to the external power supply infrastructure via the inverter circuits 25a, 25b, the converter circuits 21a, 21b, the transformers 15 and the pantographs 13. However, another option is for the regenerated electrical power from the second traction motors, and optionally the first traction motors, to be stored in the OBESSs 7 to increase their SoC. Yet another option is for the regenerated electrical power from the first traction motors, and optionally the second traction motors, to be dissipated as heat in brake grid resistors (not shown). When regenerative braking is enabled to increase the SoC of the OBESSs, this is referred to as a recharge mode.

When electrical power is applied to the DC links, step changes in voltage and capacitive loads can induce high in-rush currents. To avoid system damage by these high currents, first soft-charging circuits (not shown) can be provided between the main voltage transformers 15 and the converter circuits 21a, 21b to limit the current while the first and second DC links are being charged to achieve the first DC voltage. In particular, the control system can be configured to connect the main voltage transformers to the converter circuits using the first soft-charging circuits when switching from either of the self-powered drive modes to the externally powered drive mode, or when bringing the DC links to the first DC voltage at the beginning of train operation.

In the hybrid mode, electrical power is provided to the first traction motors 9a from the GUs 6. Electrical power may also be provided to the second traction motors 9b from the OBESSs 6 (for example during acceleration phases).

The main voltage transformers 15 are disconnected from the first 21a and second 21b converter circuits and the external current collectors are disconnected from the external power supply infrastructure, for example by lowering the pantographs 13. The VCBs 17 are also opened.

Three-phase AC electrical power generated by the GUs 6 is supplied to the first converter circuits 21a and converted to DC electrical power which is conducted in the first DC links. These are maintained at the first DC voltage. The first inverter circuits 25a invert the DC electrical power to three phase AC power to drive the train using the first traction motors 9a.

DC electrical power outputted by the OBESSs 7 is supplied to the second DC links, which are maintained at the second DC voltage. The DC electrical power is inverted by the second inverter circuits 25b to provide the three phase AC power required by the second traction motors 9b.

Second soft-charging circuits may be provided between the OBESSs 7 and their second DC links to limit in-rush current when bringing the DC links to the second DC voltage. For example, the control system can connect the OBESSs to their DC links using the second soft-charging circuits when first charging the DC links to the second DC voltage at the beginning of train operation, or when switching from the externally powered drive mode to either of the self-powered drive modes.

DC electrical power can be provided to neighbouring cars that do not have GUs 6 or OBESSs 7 through the inter-car DC electrical connectors 24. The APSs 22a, 22b have their own inverters and transformers enabling them to receive power at either the first or second DC voltage. In particular, first APS units 22a connected to the first converter-inverter devices receive power at the first DC voltage and are isolated from second APS units 22b connected to the second converter-inverter devices which receive power at the second DC voltage. Therefore, in the hybrid self-powered drive mode the first APS units 22a and the second APS units 22b receive power at different voltages. However, the transformers within the APS units allow the first and second APS units to provide the same voltage to the auxiliary systems regardless of their input power source.

In the hybrid self-powered drive mode, the control system adjusts the amount of electrical power generated by the GUs 6 and outputted by the OBESSs 7 to achieve target torques for the first 9a and second 9b traction motors. In some examples, the control system is configured to prioritise the generation of power from the GUs, with torque being mainly provided by the first traction motors. When the GUs and first traction motors are unable to achieve the target torques, the control system demands power from the OBESSs to provide additional torques from the second traction motors. This is most likely to happen during the acceleration phase of a journey when the GUs operate at full power. When the railway vehicle reaches the target velocity, the target torques are reduced and the control system reduces the power demanded from the OBESSs and then the GUs, and the vehicle enters a "cruising" state. If the target torques reduce further to zero (and there is no active braking of the vehicle), "cruising" becomes "coasting".

When active braking of the train is required, one braking option in the hybrid self-powered mode is for the control system to perform regenerative braking (i.e., when the recharge mode is enabled). In this case the second traction motors 9b operate as generators to produce a negative torque contribution. The second traction motors thus operate as generators, and kinetic energy of the railway vehicle is converted into regenerated electrical power which is used to charge the OBESSs 7. In this way, the OBESSs can improve fuel consumption by using the regenerated power to provide support to the GUs 6 during acceleration.

However, the diesel engines of GUs 6 of trains operating in the hybrid self-powered drive mode still consume fuel and generate carbon dioxide emissions because the GUs are always running in this mode. In particular, combustion engines consume fuel and produce emissions even when idling. However, the third OBESS-only drive mode enables the GUs to be disabled, reducing overall fuel consumption and emissions for a journey.

Moreover, in the hybrid self-powered drive mode the first DC links and second DC links are operated at the first and second DC voltages and are thus electrically isolated from each other. Therefore, only regenerative power from generator operation of the second traction motors 9b and inverter circuits 25b can be used to charge the OBESSs. Regenerated power from generator operation of the second traction motors 9a and inverter circuits 25a associated with the GUs can be dissipated in brake grid resistors.

In the battery-only mode, the control system disables the GUs 6 and electrical power is provided to the second 9b traction motors from the OBESSs 7 alone. Thus, the combustion engines can be powered off, saving fuel and reducing emissions.

DC electrical power outputted by the OBESSs 7 is supplied to the second DC links. These links are therefore maintained at the second DC voltage. The control system brings the second DC links to the second DC voltage using the second soft-charging circuits as part of switching from the externally powered drive mode to the OBESS-only drive mode. The second inverter circuits 25b invert the DC electrical power to three phase AC power to drive the train using the second traction motors 9b.

The control system can perform regenerative braking in which the second traction motors 9b operate as generators to produce a negative torque contribution. The second traction motors thus operate as generators, and kinetic energy of the railway vehicle is converted into regenerated electrical power which is used to charge the OBESSs 7.

In addition, the control system is configured to close inter-car DC electrical connectors 24 along the connecting lines joining the first 22a APS unit. Thus, DC electrical power outputted by a given OBESSs 7 can be shared with the APS unit. Each of the APS units has an electrical network redundancy to the following electrical equipment, therefore at least one APS being connected to an active power resource (e.g. GU or batteries) enables that equipment to work. Or, by closing inter-car DC electrical connectors 24 along the connecting lines, the first 22a and second 22b APS unit can be joined. Consequently, the power outputted from the OBESSs 7 can be shared among across more than one APS unit. Accordingly, all the APS units connected in this way are configured to power the auxiliary systems using DC electrical power provided at the second DC voltage. Advantageously, this arrangement allows the GUs 6 to be shut down completely while still ensuring power is provided to all the APS units and essential systems.

Alternatively, the drive system may be configurable such that electrical power outputted by the OBESSs 7 can be used to drive the first traction motors 9a. Advantageously, this allows the same motive power to be achieved in the OBESS-only drive mode as in the externally powered and hybrid self-powered drive modes. Moreover, the connection of the OBESSs to the first traction motors allows generator operation of the first traction motors and the first inverter circuits 25a to be used to charge the OBESSs during regenerative braking. This arrangement enables more kinetic energy of the train to be recovered during braking and reused by the OBESSs.

For example, in one arrangement, the control system is configured so that the second DC links provide DC electrical power to the first DC links via closure of internal APS contactors of the first APS units 22a. A similar function, however, can be achieved by closure of the DC electrical connectors 24 on the connecting lines between the first APS units 22a and their respective first DC links. In this case, any internal APS contactors of the first 22a and second 22b APS units are kept closed allowing these DC electrical connectors 24 to act as APS contactors managing connecting/disconnecting of the first and second DC-links. Whether the APS contactors are of the internal type or are of external type formed by the DC electrical connectors 24, DC electrical power flows from the second converter-inverter devices associated with the OBESSs 12 to the first converter-inverter devices in the opposite direction to its direction of flow in the other drive modes. Thus, the first DC links are maintained at the second DC voltage in the third drive mode, and this DC electrical power is then inverted to three phase AC power by the first inverter circuits 25a to drive the first traction motors 9a. This arrangement allows the OBESSs to provide power to the both the first and second traction motors with little or no additional drive system infrastructure.

### Figure 2

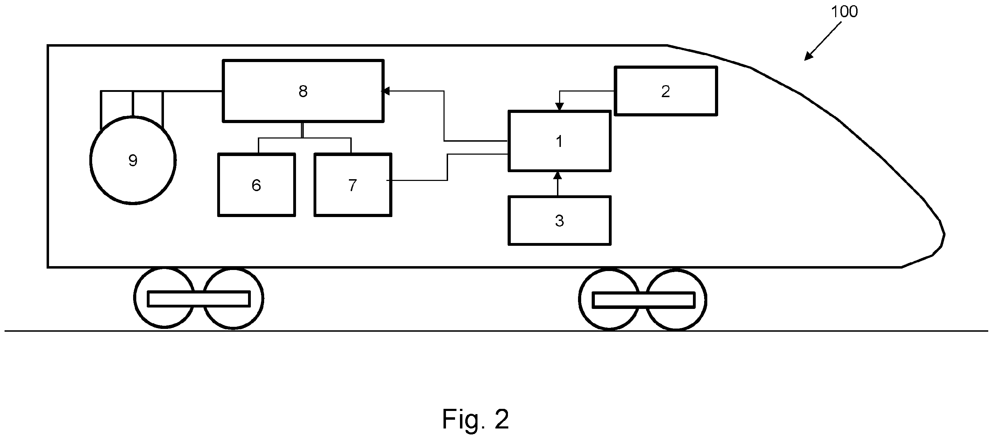

Figure 2 shows a schematic of a train 100, including the drive system of Figure 1. The train 100 includes a control system 1, also referred to a control unit, which is connected to a location monitor 2 (for example a GPS unit). The control system 1 is also connected to a database 3, which may contain operating data regarding the train (for example a planned route or usage, as discussed in detail below). The control system 1 is also connected to a power converter 8, which can be, for example, the power converter circuits 21a and 21b discussed above.

The power converter 8 is connected to: a motor 9 (e.g. traction motors for moving the train), one or more energy storage systems (e.g., OBESSs) 7 and the diesel engines of the GUs 6. In this example, the train does not have an overhead power module (e.g., no external current collector, main voltage transformer, vacuum circuit breaker etc.) and is configured to operate in only the self-powered drive modes (i.e., generator mode, hybrid mode, and battery-only mode).

The control system 1 is configured to receive a detected SoC measurement from the OBESSs and determine an availability of each of the driving modes based on the detected SoC. The driving modes which are determined to be available may be referred to as candidate, available, allowed, or enabled, driving modes. The control system 1 may then operate the drive system in one or the driving modes which was determined to be available.

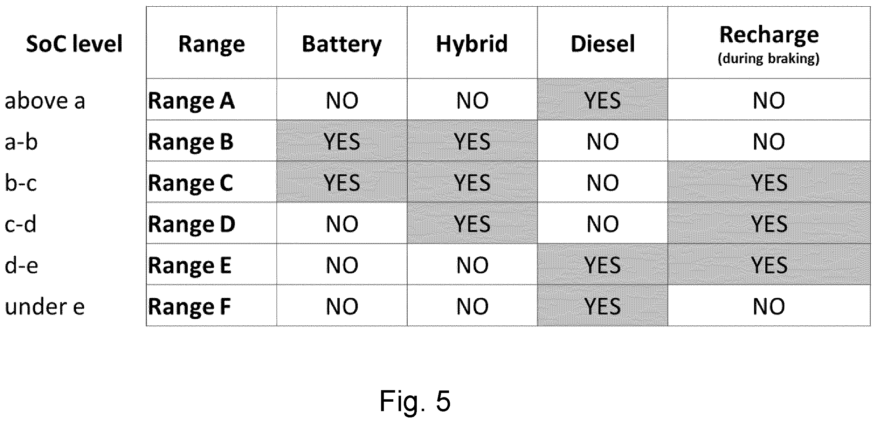

In particular, the control system 1 is configured to compare the detected SoC to a series of SoC thresholds (described in more detail below in relation to Figure 5) so as to determine which of a plurality of SoC value ranges the detected SoC is within, and enable or disable the driving modes (and a recharge mode of the OBESSs) depending on the determination. This process may involve overriding a driver requested mode or a system requested mode, thereby preventing the SoC of the OBESSs from decreasing too far and maximising a proportion of time that the train spends in the lower emissions battery-only and hybrid driving modes.

### Figure 3

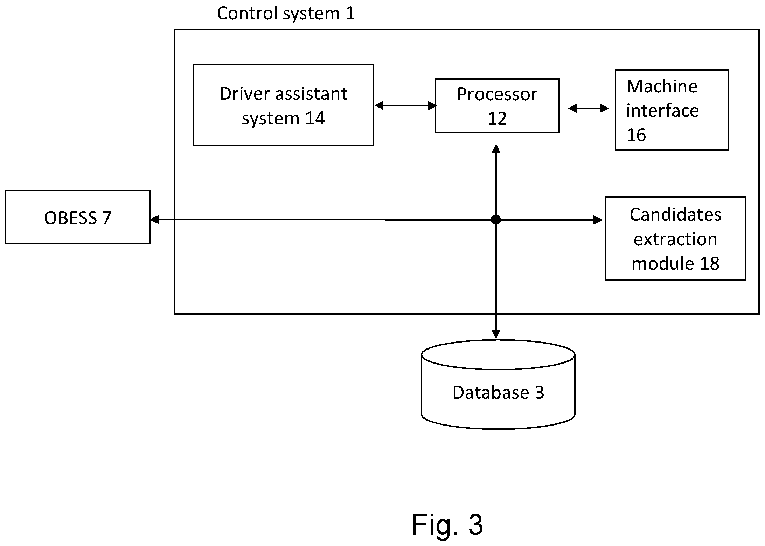

Figure 3 shows an example of the control system 1 for operating the drive system. The control system 1 comprises a processor 12 for executing instructions and operating the drive system. The processor is connected to a driver assistant system 14 for communicating with a driver of the train and receiving requested driving modes from the driver. Additionally, the processor is connected to a machine interface 16 for interfacing with the drive system and implementing the driving mode determined by the processor.

Additionally, the control system 1 comprises a candidates extraction module 18 which is configured to determine the availability of each driving mode based on the detected SoC received from the OBESSs 7. The control system 1 is connected to the database 3 which contains a list of available (i.e., candidate) driving modes associated with SoC value ranges. The candidates extraction module is configured to use the detected SoC to retrieve a list of available driving modes associated with the SoC value range in which the detected SoC falls.

The processor 12 then compares requested driving mode (e.g., from the driver assistant system 15) to the list of available driving modes and operates the drive system in the requested driving mode, only if, the requested driving mode was determined to be available. Otherwise, the control system is configured to reject the requested driving mode. The rejection of the driving mode may be communicated to the driver via the driver assistance system 14. Additionally, the processor 12 is configured to periodically compare a current driving mode of the drive system to the list of available driving modes, and, if the current driving mode is no longer an available driving mode, operate the drive system in a different mode which is allowed.

### Figure 4

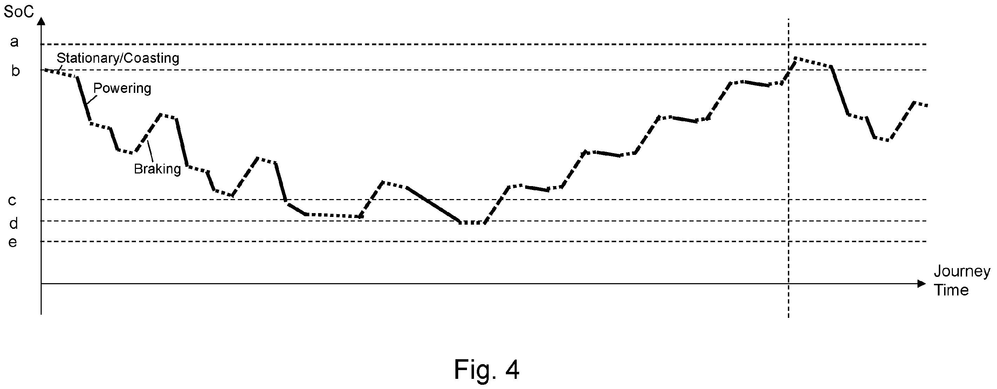

Figure 4 shows a line plot of the SoC of the onboard energy storage system (OBESS) against journey time. The dotted lines represent when the train is stationary or coasting (i.e., when the SoC decreases slowly or remains constant), the solid line represents when the train is moving under OBESS generated power (i.e., when the SoC decreases quickly), and the dashed line represents when the train is braking and performing regenerative braking (i.e., when the SoC increases). The SoC axis is divided into six value ranges by the SoC thresholds a to e which define the SoC value ranges in which each driving mode and the recharge mode may be enabled or disabled as set out in the table of Figure 5 below. In summary, when the SoC of the OBESSs is determined to be:
Above threshold a, and so in range A:
The OBESSs are disconnected as the SoC is above a maximum DoD (Depth of Discharge) of the OBESSs

Between thresholds a and b, and so in range B:
Recharge mode is deactivated in order to prevent any increase of the OBESSs SoC

Between thresholds b and c, and so in range C:
The drive system operates using battery-only mode or hybrid mode, and recharge mode is enabled.

Between thresholds c and d, and so in range D:
The drive system should operate in only hybrid mode and recharge mode. The absence of battery-only mode in this SoC value range results in an increase in the OBESS range by reducing the power required from the OBESSs.

Between thresholds d and e, and so in range E
The drive system should operate in only generator mode and with recharge mode enabled. This allows the OBESSs to only increase their SoC without using power from the OBESSs.

Below e, and so in range F:
The OBESSs are disconnected because the SoC is below the DoD (Depth of Discharge) indicating a potential fault in the drive system.

In an example, a has a value of 80%; b has a value of 70%, c has a value of 40%, d has a value of 30%, and e has a value of 20%.

The driving mode is preferably selected according to the above scheme, even if a driver request is received or if the train is in a geographical area associated with a preprogrammed driving mode. The SoC values of the thresholds a to f are configurable. For example, these may be programmed by an operator before the start of a train journey or based on battery chemistry etc.

In some examples, the control system 1 is configured to implement a buffer zone around each threshold within which the driving mode of the drive system may not be changed. Each buffer zone may be defined by a sub-range +/-X% around a respective SoC threshold. For example, if the detected SoC is between d and e with the drive system operating in the generator mode, and the SoC increases to the threshold d (owing to regenerative braking), then the control system will not update the driving mode to the hybrid mode until the SoC has reached threshold d + X%. Likewise, if the SoC decreases again, the control system will not switch the current driving mode back to generator mode until the SoC reaches threshold d - X%. The provision of buffer zone thereby prevents the drive system from switching rapidly between driving modes due to small fluctuations of the SoC.

### Figure 5

Figure 5 shows an example of a driving mode availability table stored in the database 3. In the first column of the table, the total SoC range of the OBESSs is divided into six sub-ranges (i.e., SoC value ranges), a-e, as described above for Figure 4. The availability for each driving mode (battery-only, hybrid, and generator (i.e., diesel)) is provided in the rows for each SoC value range. Additionally, the availability of the recharge mode in each SoC value range is provided in the final column.

As shown in Figure 5, the availability of the driving modes is configured so that when the SoC is below a low-charge threshold (in ranges E and F) the hybrid and battery modes are disabled to prevent the SoC from decreasing further and the drive system is operated in the diesel (generator) mode. On the other hand, if the SoC is above the low-charge threshold (in range D) the drive system is operated in the hybrid mode to reduce overall emissions of the train and provide assistance to the GUs. Additionally, if the SoC is also above a mid-charge threshold (in ranges B or C) the drive system is operated in the battery only or hybrid modes. Finally, if the SoC if above a high-charge threshold (in range A) the OBESS is assumed to be operating in an overcharge SoC value range in an error state. Accordingly, the OBESSs are disconnected, and the drive system is operated in the diesel (generator) mode to avoid causing damage or any further faults.

Moreover, the recharge mode is also disabled in the highest ranges of SoC (i.e., above an upper recharge threshold, defined by threshold b in Figure 4). Therefore, the OBESSs are prevented from reaching a maximum state of charge or an overcharge SoC value range which could shorten the lifetime of OBESSs. On the other hand, if the SoC decreases too low (i.e., in range f, below a lower recharge threshold, defined by threshold e in Figure 4) it is assumed that there is a fault in the OBESSs. Accordingly, they are disconnected from the rest of the drive system and recharge mode is disabled.

### Figure 6

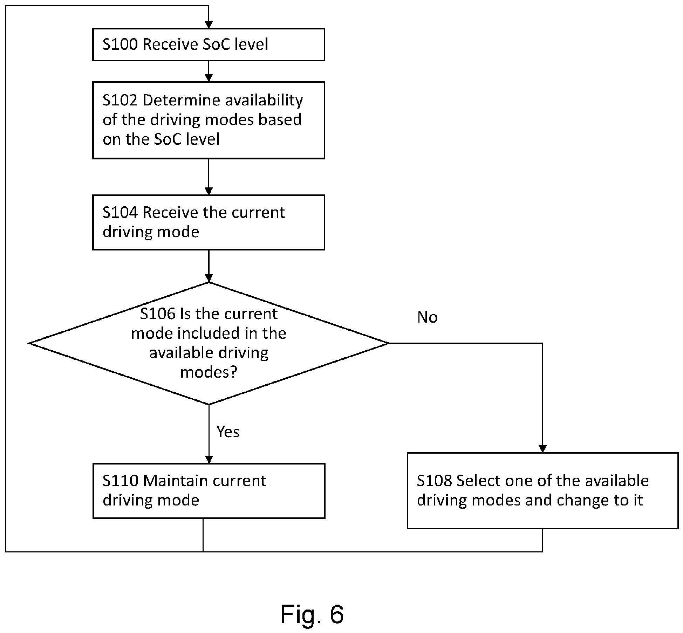

Figure 6 shows a process for operating the drive system according to aspects of the present invention.

In S100 the control system receives a detected SoC level from the OBESSs.

Next, in step S102 the control system determines an availability of each of the driving modes based on the SoC level to obtain a list of available driving modes. This step includes retrieving a driving mode availability table from a database, and retrieving the list of available driving modes associated with the SoC value range in which the received SoC level falls.

In step S102 the control system receives or determines a current driving mode. For example, the current driving mode may be stored in a memory of the controller or received from the drive system. Notably, steps S104 may be performed before step S100.

In step S106 the control system determines whether the current driving mode is included in the list of available driving modes that was retrieved from the database. If the current driving mode is an available driving mode, then the control system proceeds to step S108 and continues operating the drive system in the current driving mode. However, if the current driving mode is not an available driving mode (e.g., because the SoC has decreased owing to use of the OBESSs) then the control system moves to step S110 and updates the drive system to operate in one of the available driving modes. If there is more than one driving mode available, then the control system is configured to default to the battery-only mode, then to the hybrid mode, and lastly to the generator mode in the listed order of preference.

The process of Figure 6 may be repeated, e.g., periodically or after the train has travelled a predetermined distance, so that the SoC can be continually monitored, and the driving mode updated accordingly.

### Figure 7

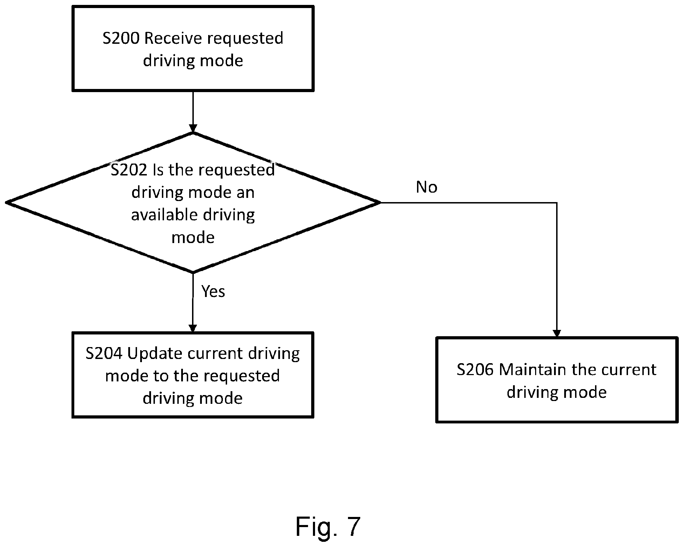

Figure 7 shows a process for operating the drive system when a driving mode is requested. The control system may be configured to perform this process in addition to the process of Figure 6.

In step S200 the control system receives a requested driving mode. For example, the requested driving mode may be received from a driver interface of the train having been input by a driver, or from an automatic control system of the train. For example, the automatic control system may be configured to request driving modes based on a GPS location of the train. For example, the automatic control system may be configured to request the battery-only driving mode in low emissions zones or the hybrid mode in areas with an uphill gradient.

In step 202, the control system is configured to determine if the requested driving mode is an available driving mode. The availability of the driving mode is determined based on the detected SoC of the OBESSs as described above for Figure 6.

If the requested driving mode is determined to be available, then the control system continues to step S204 wherein the drive system is updated to operate in the requested driving mode. However, if the requested driving mode is not an available driving mode, then the control system is configured to override the driver or system request and move to step S206 wherein the requested driving mode is rejected.

Accordingly, in step S206, the control system continues operating the drive system in the current driving mode. Additionally, a notification may be provided to the driver via the driver interface indicating that the requested driving mode was rejected and, optionally, why. For example, if the driver requested the battery-only mode, the notification may indicate that the OBESS does not have a high enough SoC to operate in the battery-only mode. Or, if the driver requested the generator mode, the notification may indicate that the SoC is currently high and so the drive system should be using the hybrid mode or the battery-only mode to reduce emissions.

### Figure 8

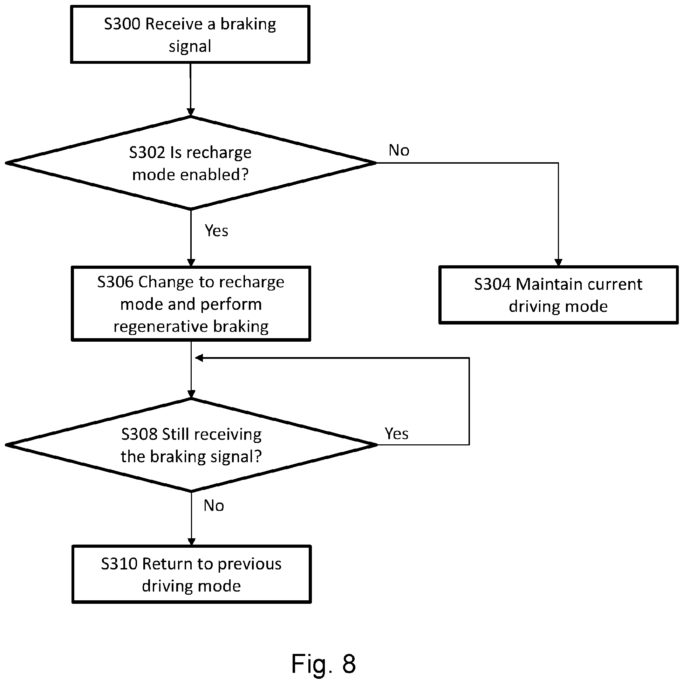

Figure 8 shows a process for operating the drive system in a recharge mode based on the detected SoC. As described above, when recharge mode is enabled, the drive system is configured to increase the SoC of the OBESS using regenerative braking.

In step S300 the control system receives a braking signal, for example from a driver interface of the train.

In step S302 the control system determines if the recharge mode is enabled. This step may be performed in the same manner as described above in relation to Figure 6 for determining the availability of the driving modes. That is, the control system may compare the detected SoC to one or more thresholds to determine an SoC value range in which the detected SoC is located. The control system then retrieves a list of available driving modes from the database which are associated with the determined SoC value range. Accordingly, if the recharge mode is included in the list of available driving modes, then it is enabled.

If the recharge mode is not enabled, then the control system moves to step S304 where the current driving mode is maintained and the drive system brakes as normal, without performing regenerative braking. For example, kinetic energy may be dissipated as heat in brake grid resistors.

However, if the recharge mode is enabled, then the control system moves to step S306 wherein the drive system is updated to operate in the recharge mode and perform regenerative braking. For example, operating the drive system in recharge mode may involve using inverter circuits to operate the traction motors as generators as described above for Figure 1.

In step S308, the control system determines whether the brake signal is still being received and continues to operate the drive system in recharge mode until the train has finished braking and the braking signal is no longer being received. When the braking signal is no longer detected, the control system continues to step S310 wherein the drive system is operated in the previous driving mode that it was in before the braking signal was detected.

### Figure 9

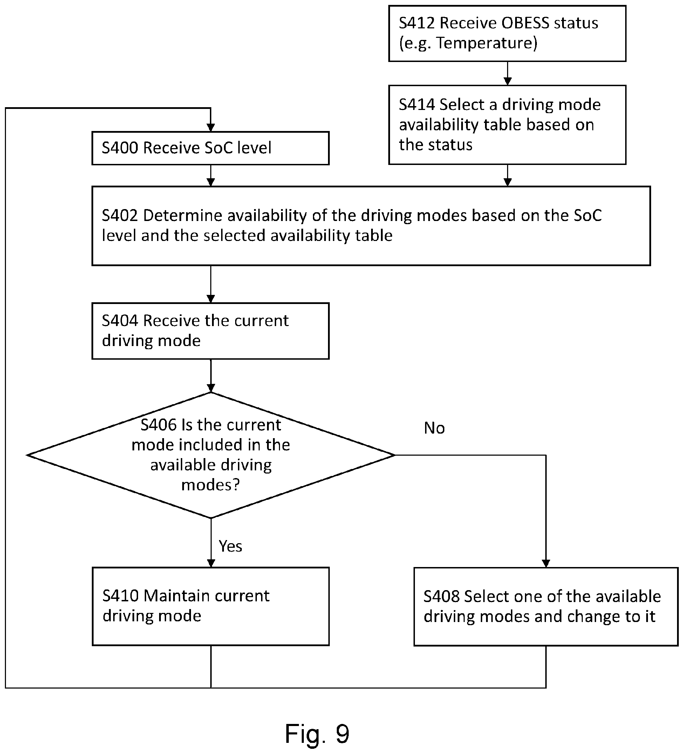

Figure 9 shows a process for operating the drive system wherein the availability of the driving modes is based on the detected SoC and also on a status of the OBESSs. In this example, the status of the OBESSs is accounted for by adjusting the level of the SoC thresholds for determining the available driving modes.

Accordingly, in Figure 9 the control system performs a step S412 of receiving the status of the OBESSs and the, in step S414 a driving mode availability table corresponding to the received status is retrieved from the database. In this example, the SoC thresholds defined in the selected driving mode availability table are dependent on the received status of the OBESS. Accordingly, the SoC value range, and its associated available driving modes, in which the detected SoC falls in Step S402 can vary depending on the received status. The remaining steps, S400 to S410, of Figure 9 are the same as described above for Figure 6, except that in S402 the control system determines the availability of the driving modes based on the SoC level using the availability table which was selected based on the received status in step S414.

For example, the OBESS status may be a temperature of the OBESSs. In further examples, the status may indicate any one or more of: a humidity, an error status, an operating efficiency, etc of the OBESSs.

### Figure 10

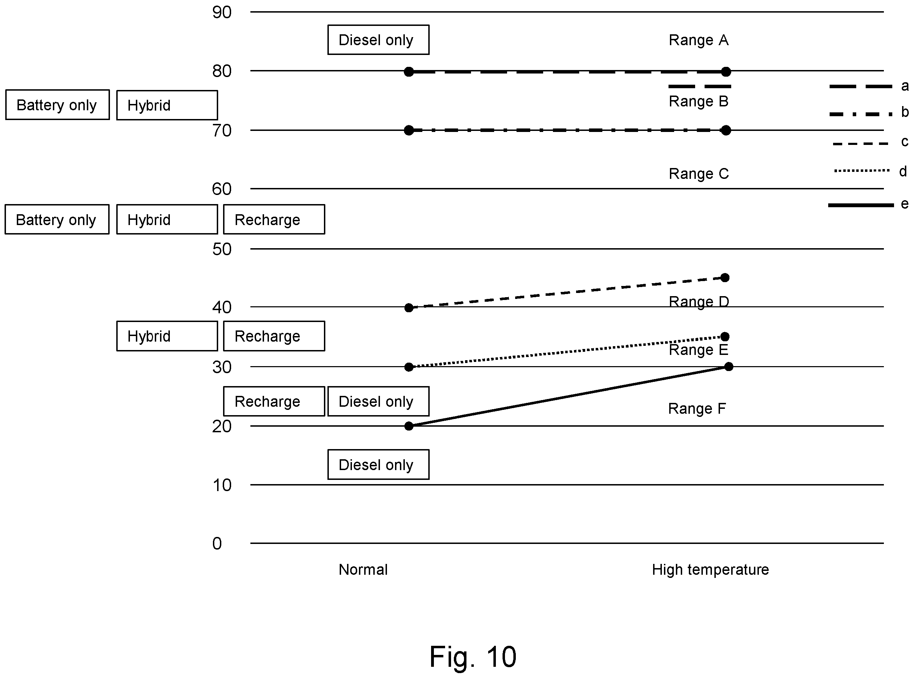

Figure 10 shows a diagram of how the SoC thresholds defining the SoC value ranges may be adjusted based on the status of the OBESSs when the status is temperature. The y-axis of Figure 10 represents percentage SoCs of the OBESS, and the x-axis represents a relative temperature of the OBESSs. The thresholds a to e correspond to the SoC thresholds discussed above in relation to Figure 4, and the ranges A-F defined by the SoC thresholds correspond to the thresholds discusses above in relation to Figure 5. The available driving modes, including the recharge mode, associated with each SoC value range are shown on the left of the diagram.

As shown in Figure 10, at higher temperatures, the two lower thresholds (thresholds d and e) defining upper limits for when the generator mode and the recharge mode may be enabled, are increased to higher SoCs. At lower temperatures (i.e., "normal" temperatures) the SoC thresholds d and e are lower. Additionally, a mid-charge threshold (threshold c), defining a lower limit for the battery-only mode being available, is also increased at higher temperatures compared to the "normal temperatures". In this way, the control system is able to accommodate changing environmental conditions when selecting a driving mode based on SoC.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.
- 1: Control system
- 2: Location monitor
- 3: Database
- 6: Generator unit
- 7: OBESS
- 8: Power converter
- 9: Motor
- 12: Processor
- 13: External current collector
- 14: Driver assistant system
- 15: Main voltage transformer
- 16: Machine interface
- 17: Vacuum circuit breaker
- 18: Candidates extraction module
- 20: Car
- 21: Converter circuit
- 24: DC Electrical connector
- 25: Inverter circuit
- 22: Auxiliary power supply unit
- 100: Train

## Claims

1. A control system (1) for a train (100), the control system being configured to operate a drive system (6, 7, 8, 9) of the train in a plurality of driving modes including:
a generator mode, in which power for the drive system (6, 7, 8, 9) is drawn from an on-board generator (7),
a hybrid mode, in which power for the drive system (6, 7, 8, 9) is drawn from the on-board generator assisted by one or more on-board electrical storage systems (6), and
a battery-only mode, where power for the drive system (6, 7, 8, 9) is drawn only from the one or more on-board electrical storage systems (6),
wherein the control system (1) is configured to:
receive a detected state of charge (S100), SoC, from the one or more on-board electrical storage systems,
determine an availability of more than one of the driving modes based on the detected SoC (S104), and
allow the drive system (6, 7, 8, 9) to operate in one of the plurality of available driving modes.

2. The control system (1) of claim 1 further configured to operate the drive system (6, 7, 8, 9) in one of the plurality of available driving modes.

3. The control system (1) of claims 1 or 2 further configured to:
receive a requested driving mode, and
if the requested driving mode is an available driving mode, operate the drive system (6, 7, 8, 9) in the requested driving mode.

4. The control system (1) of any preceding claim wherein determining the availability more than one of the driving modes comprises:
determining which of a plurality of predetermined SoC value ranges the detected SoC resides in, and
retrieving, from a database (3), a list of available driving modes associated with the determined SoC range.

5. The control system (1) of claim 4, wherein each SoC value range is defined by one or more SoC thresholds.

6. The control system (1) of claim 5 wherein each of the one or more SoC thresholds has an associated buffer zone defining a margin above and/or below the respective threshold,
wherein the control system (1) is configured to change the availability of the one or more driving modes based on the detected SoC only if the detected SoC is outside of the associated buffer zones.

7. The control system (1) according to any of claims 5 to 6 wherein the one or more SoC thresholds include a low-charge threshold,
wherein if the detected SoC is lower than the low-charge threshold, the control system (1) is configured to operate the drive system (6, 7, 8, 9) in the generator mode.

8. The control system (1) of claim 7 wherein if the detected SoC is higher than the low-charge threshold, the control system (1) is configured to operate the drive system (6, 7, 8, 9) in the battery-only mode or in the hybrid mode.

9. The control system (1) of claims 7 or 8 wherein the SoC thresholds include a mid-range threshold,
wherein if the detected SoC is lower than the mid-range threshold and higher than the low-charge threshold, the control system (1) is configured to operate the drive system (6, 7, 8, 9) in only the hybrid mode.

10. The control system (1) of claim 9 wherein if the detected SoC is higher than the mid-range threshold, the control system (1) is configured to operate the drive system (6, 7, 8, 9) in the battery-only mode or the hybrid mode.

11. The control system (1) according to claims 9 or 10 wherein the one or more SoC thresholds include a high-charge threshold, wherein if the detected SoC is lower than the high-charge threshold and higher than the mid-range threshold, the control system is configured to operate the drive system in the battery-only mode or the hybrid mode.

12. The control system(1) of claim 11 wherein the high-charge threshold corresponds to a maximum SoC of the one or more on-board electrical storage systems (6), such that the SoC range above the high-charge threshold corresponds to an overcharge range of the one or more on-board electrical storage systems.

13. The control system (1) according to any of claims 5 to 12 further configured to receive a status of the drive system (6, 7, 8, 9) and adjust the one or more SoC thresholds based on the status.

14. The control system (1) of any preceding claim wherein the control system (1) is configured to enable or disable a recharge mode of the drive system (6, 7, 8, 9) based on the detected SoC;
the recharge mode defining a capability of the one or more on-board electrical storage systems (6) to re-charge during braking of the train to increase the SoC of the one or more on-board electrical storage systems (6).

15. A train (100) comprising a drive system (6, 7, 8, 9) configured to operate in a plurality of driving modes, and a control system (1) configured to operate the drive system according to any preceding claim.
